Europäisches Patentamt

European Patent Office

Office européen des brevets

(11) Numéro de publication: **0 389 330**
**A1**

# DEMANDE DE BREVET EUROPEEN

(21) Numéro de dépôt: **90400647.5**

(22) Date de dépôt: **12.03.90**

(51) Int. Cl.⁵: **G21C 13/06**

(30) Priorité: **22.03.89 FR 8903776**

(43) Date de publication de la demande:
**26.09.90 Bulletin 90/39**

(84) Etats contractants désignés:
**BE CH DE ES LI SE**

(71) Demandeur: **FRAMATOME**
**Tour Fiat 1, Place de la Coupole**
**F-92400 Courbevoie(FR)**

(72) Inventeur: **Morandiere, Jean-Claude**
**Vellerot**
**F-71510 St Beraun Sur Dheune(FR)**

(74) Mandataire: **Bouget, Lucien et al**
**Cabinet Lavoix 2, Place d'Estienne d'Orves**
**F-75441 Paris Cédex 09(FR)**

(54) Bouchon étanche pour trou taraudé et outillage et procédé de pose de ce bouchon.

㊐ Le bouchon (8) comporte un corps en deux parties (9, 10) en forme de flasques assemblés entre eux de manière a être bloqués en rotation autour de leur axe commun et mobiles en translation axiale l'un par rapport à l'autre. Un joint (11) en matériau souple est intercalé entre les deux flasques (9, 10) dans leur partie périphérique. Des moyens (16, 23, 24, 31) permettent de réaliser le serrage axial des deux flasques (9, 10). L'espace (12) entre les flasques (9, 10) peut être mis sous vide préalablement au serrage des flasques. Un outillage permet de réaliser la mise sous vide de l'espace (12) entre les flasques puis le serrage, par l'intermédiaire d'un raccord (21).

FIG.1

EP 0 389 330 A1

L'invention concerne un bouchon étanche pour trous taraudés tels que les trous de fixation d'un couvercle sur la bride de cuve d'un réacteur nucléaire à eau sous pression ainsi qu'un outillage pour la manutention et le montage de ce bouchon.

Les cuves des réacteurs nucléaires à eau sous pression comportent une bride à leur partie supérieure sur laquelle on vient fixer le couvercle de cuve par des goujons engagés dans des trous traversant la bride du couvercle et dans des trous taraudés borgnes usinés dans la bride de cuve. Les goujons sont serrés par un ensemble d'écrous venant en appui sur la face supérieure de la bride du couvercle.

Cet ensemble écrou et goujon est dévissé et extrait des taraudages et des trous correspondants, avec une certaine périodicité dans le temps, pour réaliser les diverses opérations de déchargement et de rechargement du combustible et de maintenance des équipements internes.

Le déchargement et le rechargement des réacteurs à eau sous pression est une opération qui intervient normalement chaque année. Cette opération dure en général trois semaines et, pendant cette période, il convient de protéger les taraudages contre l'introduction de substances ou corps étrangers.

Dans la majorité des chaudières nucléaires, la cuve est placée à l'intérieur d'une cavité en béton appelée piscine. Pendant le fonctionnement du réacteur, cette piscine est vidée de son eau.

Pendant les opérations de rechargement du combustible, la piscine est remplie d'eau, de manière à maintenir un niveau de radiation faible, au voisinage de son niveau supérieur.

Cette protection constituée par un écran d'eau d'une hauteur de huit mètres environ permet d'extraire, après enlèvement du couvercle, les assemblages combustibles à remplacer dans le coeur du réacteur.

De même, cette protection reste nécessaire pour le rechargement des assemblages neufs à la place des assemblages usagés qui ont été extraits. L'eau de la piscine comporte de plus un additif sous forme d'acide borique dont le rôle est de maintenir le coeur du réacteur dans un état sous-critique.

Avant de procéder au déchargement et au rechargement des assemblages combustibles à l'intérieur du coeur, il est nécessaire de retirer le couvercle de la cuve. Ce couvercle de cuve est habituellement fixé sur la cuve par un ensemble de goujons qui traversent verticalement la bride annulaire du couvercle et s'engagent dans des trous borgnes taraudés situés dans des positions correspondantes sur la bride de cuve. Ces goujons sont en nombre important de l'ordre de 50 ou plus suivant le type de cuve.

Le couvercle de cuve lui-même est enlevé lorsque la piscine a été remplie d'eau renfermant de l'acide borique. De façon à protéger les parties taraudées des trous recevant les goujons, pour éviter toute corrosion engendrée par les produits réactifs mélangés à l'eau, par exemple l'acide borique, il est nécessaire de procéder à la protection des alésages par des bouchons.

Il était connu jusqu'ici d'utiliser des bouchons filetés qui étaient vissés manuellement à l'intérieur des alésages. Toutefois, la pose de ces bouchons vissés présentent certaines difficultés et les personnels chargés de ces opérations sont de ce fait exposés pendant des temps importants au rayonnement provenant de la cuve.

De plus, les bouchons filetés ne possèdent pas de bonnes propriétés d'étanchéité et fréquemment, de l'eau boriquée se trouvait en contact avec la partie inférieure du filetage. Les bouchons filetés ne sont donc pas adaptés pour protéger l'alésage contre les risques de corrosion.

Pour améliorer l'étanchéité des bouchons introduits dans les alésages des brides de cuve, les défauts d'étanchéité étant dus principalement aux irrégularités de surface de la partie supérieure non filetée des alésages, on a proposé, dans le brevet EP-A-0. 187.707, d'utiliser un bouchon gonflable pour la protection de ces alésages.

Le bouchon décrit dans le brevet EP-0. 187.707 comporte deux pièces rigides maintenant un joint en forme de U. Sur l'une des pièces est placée une vanne permettant de mettre en pression l'espace défini entre les deux pièces et le joint, à l'aide d'air comprimé. Lorsque le joint est gonflé à la pression désirée, sa surface extérieure est en contact étanche avec la partie supérieure non filetée de l'alésage à protéger. Cette pression est maintenue à l'aide d'un clapet anti-retour. Des fuites interviennent au niveau de ce clapet anti-retour et, de ce fait, la pression interne diminue à l'intérieur du joint et l'étanchéité requise n'est plus obtenue. Il peut donc se produire également dans ce cas des fuites d'eau boriquée vers l'intérieur de l'alésage.

En outre, lors du gonflement du bouchon, l'air contenu dans le trou taraudé est comprimé, si bien que cette surpression a pour conséquence une tendance à expulser le bouchon hors de son logement.

De plus, la partie supérieure du bouchon est en surépaisseur par rapport au plan du joint de la cuve, ce qui augmente les risques d'accrochage des bouchons lors des interventions. Cet inconvénient, combiné avec la surpression créée dans l'alésage sous le bouchon, augmente la tendance de ce bouchon à être expulsé de son logement.

La partie supérieure du bouchon a également un diamètre supérieur au diamètre du taraudage, si bien que la mise en place à distance de ce bouchon n'est pas facile et qu'il existe des risques de coincement du bouchon dans le passage des trous du couvercle de cuve.

On connait, par le EP-A-0.029.956, un bouchon étanche de fermeture d'un trou taraudé qui comporte un corps en deux parties assemblées entre elles de manière à être bloquées en rotation autour de leur axe commun et mobiles en translation axiale, l'une par rapport à l'autre. Un joint périphérique est intercalé entre les deux parties du corps du bouchon qui peuvent être déplacées en translation l'une par rapport à l'autre et bloquées dans une position de serrage du joint. Un outil peut être raccordé au bouchon pour assurer sa mise en place. Le serrage du joint entre les deux parties du corps du bouchon est réalisé par vissage d'un écrou.

Un tel dispositif ne permet pas de réaliser de manière certaine une mise en place correcte du bouchon et un serrage efficace du joint, en opérant à distance.

Le but de l'invention est donc de proposer un bouchon étanche pour trou taraudé tel que les trous de fixation d'un couvercle sur la bride de cuve d'un réacteur nucléaire à eau sous pression qui peut être placé facilement et à distance dans le trou taraudé, qui réalise une étanchéité efficace et qui soit stable lorsqu' il est mis en position dans le trou taraudé, ce bouchon comportant un corps en deux parties en forme de flasques dont le diamètre extérieur maximal est inférieur au diamètre intérieur d'une partie lisse d'entrée du trou taraudé assemblées entre elles de manière à être bloquées en rotation autour de leur axe commun et mobiles en translation axiale l'une par rapport à l'autre, un joint en matériau souple intercalé entre les deux parties du corps dans sa zone périphérique, des moyens de déplacement relatif et de blocage en translation axiale des deux parties l'une par rapport à l'autre, et des moyens de raccordement du bouchon à un outil de manutention et de mise en place.

Dans ce but, les moyens de déplacement et de blocage et le moyen de raccordement à un outil comportent :
- un moyeu central monté rotatif dans une partie du corps du bouchon autour de l'axe de ce corps et comportant au moins un verrou de blocage des deux parties du corps, l'une par rapport à l'autre dans la direction axiale,
- un raccord monté en position centrale dans le moyeu dont une partie interne communique avec une chambre comprise entre les deux parties du corps et fermée à sa périphérie par le joint,
- un élément d'obturation du raccord rappelé en position de fermeture par un ressort et au moins une cavité de préhension sur la surface externe du raccord.

Selon une variante de réalisation, les deux flasques du corps du bouchon sont engagés l'un sur l'autre par l'intermédiaire d'un moyeu solidaire de l'un des flasques et assemblés de manière à délimiter un espace interne étanche en communication avec l'atmosphère extérieure, par l'intermédiaire d'un clapet, l'un des flasques comportant une surface de came et l'autre flasque un axe monté mobile dans le flasque et susceptible de coopérer avec la surface de came pour réaliser le serrage et le desserrage des deux flasques.

L'invention est également relative à un outillage pour effectuer la manutention et le montage du bouchon étanche suivant l'invention.

Afin de bien faire comprendre l'invention, on va maintenant décrire, à titre d'exemples non limitatifs, en se référant aux figures jointes en annexe, plusieurs modes de réalisation d'un bouchon étanche suivant l'invention et les outillages utilisés pour réaliser la manutention et le montage de ces bouchons.

La figure 1 est une vue en coupe par un plan vertical de symétrie d'un bouchon en position de fermeture dans un trou taraudé de la bride de cuve d'un réacteur nucléaire.

La figure 2 est une vue en élévation avec coupe partielle d'un outil de manutention et de montage d'un bouchon suivant l'invention.

La figure 3 est une vue de dessus de l'outil suivant 3 de la figure 2.

La figure 4 est une vue en coupe partielle de la partie supérieure de l'outil de manutention et de montage d'un bouchon suivant l'invention.

La figure 4A représente la partie inférieure de l'outil à l'intérieur du bouchon, dans sa position de relâchement.

La figure 4B représente la partie inférieure de l'outil à l'intérieur du bouchon, dans sa position de préhension.

La figure 5 représente une vue en coupe du raccord du bouchon et d'un raccord correspondant de l'outillage en position d'ouverture.

La figure 6 représente une vue en coupe par un plan vertical de symétrie d'une variante de réalisation du bouchon.

La figure 6A est une vue de détail d'une partie d'un outil de mise en place du bouchon représenté sur la figure 6.

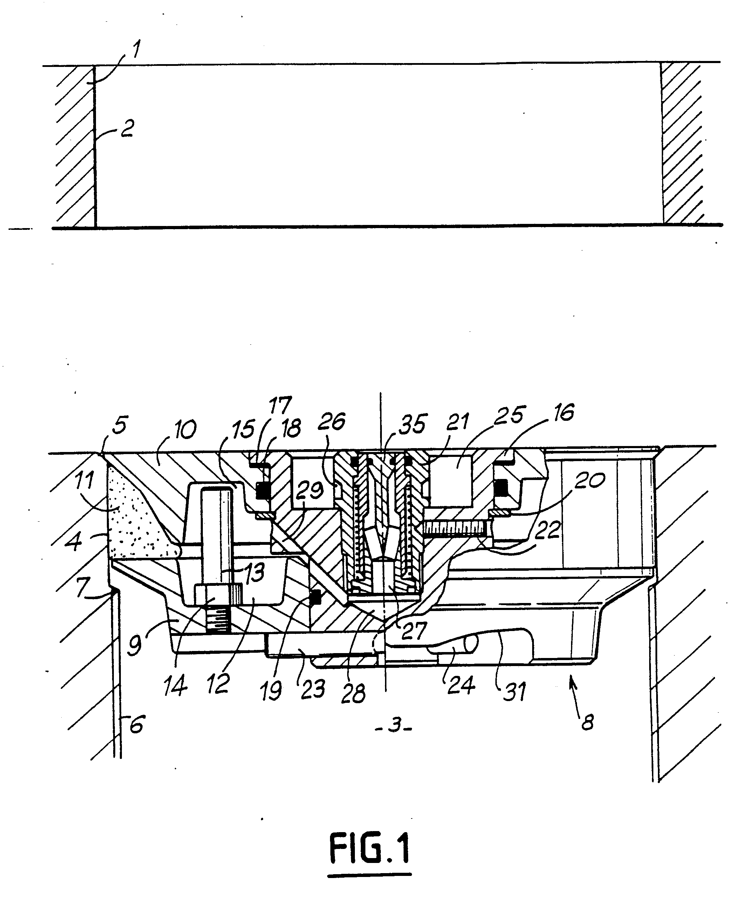

Sur la figure 1, on voit la bride 1 du couvercle de la cuve d'un réacteur nucléaire comportant un alésage 2 dont le diamètre est légèrement supérieur au diamètre du trou taraudé 3 correspondant de la bride de cuve qui comporte, à sa partie supérieure, une partie lisse 4 terminée par un chanfrein 5.

La partie taraudée 6 du trou 3 se termine vers le haut par un épaulement 7 constituant le premier filet du taraudage.

Le bouchon suivant l'invention désigné de manière générale par le repère 8 comporte un corps en deux parties constituées par des flasques 9 et 10 délimitant entre elles un espace périphérique dans lequel est placé un joint 11 en matière souple.

La surface intérieure des flasques 9 et 10 et le joint périphérique 11 délimitent une chambre annulaire 12.

Les flasques 9 et 10 sont reliés entre eux par un pion anti-rotation constitué par un goujon 13 vissé dans une partie taraudée du flasque inférieur 9 et bloqué par un écrou 14 sur ce même flasque 9.

L'extrémité supérieure du goujon 13 est lisse et vient se loger dans une cavité 15 ménagée dans le flasque supérieur 10. Ce dispositif réalise un montage anti-rotation des flasques l'un par rapport à l'autre et permet à ceux-ci de se rapprocher ou de s'écarter dans la direction axiale.

A l'intérieur des flasques 9 et 10 est monté, rotatif autour de l'axe ZZ', un moyeu central 16, grâce à une bague de glissement 17. De plus, des joints d'étanchéité 18 et 19 sont intercalés entre le moyeu central et les flasques 9 et 10 respectivement.

Un circlips 20 fixé dans une rainure du moyeu 16 vient en appui sous un épaulement prévu à la partie intérieure du flasque 10.

Un raccord central 21 est fixé sur le moyeu 16, par l'intermédiaire d'une vis à pointeau 22.

Un espace annulaire 25 est usiné à la partie centrale du moyeu 16 pour permettre d'introduire un outil dans des cavités 26 usinées dans la surface extérieure du raccord 21.

Le raccord 21 comporte un canal central 27 qui débouche dans une cavité 28 du moyeu central 16, cette cavité 28 étant reliée par un canal 29 traversant le moyeu central 16, à l'espace 12 situé entre les flasques 9 et 10.

Sur la partie inférieure du moyen central 16 sont fixés des verrous 23 et 24 destinés à coopérer avec des rampes circulaires 31 usinées dans la partie inférieure du flasque 9.

Le dispositif permettant d'assurer le verrouillage des flasques 9 et 10 l'un par rapport à l'autre comportant un ensemble de verrous 23 et 24.

Lorsqu'on fait tourner le moyeu central 16 autour de l'axe ZZ' à l'intérieur des flasques 9 et 10 en utilisant un outil introduit dans les cavités 26, on peut provoquer le verrouillage ou le déverrouillage des deux flasques 9 et 10 qui sont susceptibles de se rapprocher ou de s'éloigner l'un de l'autre, suivant le sens de rotation du moyeu.

Lorsque le flasque inférieur se rapproche du flasque supérieur, ces flasques réalisent la compression et la dilatation radiale du joint souple 11 qui vient alors s'appliquer pour réaliser l'étanchéité, sur la surface intérieure de la partie lisse 4 du trou taraudé 3.

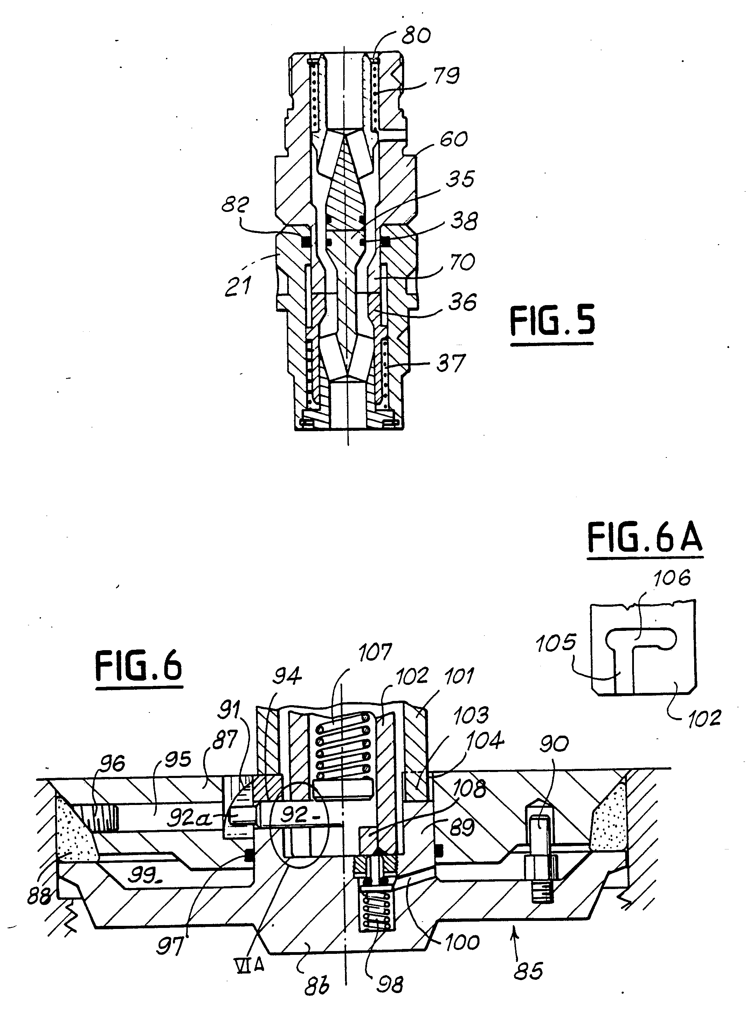

Ainsi qu'il est visible sur les figures 1 et 5, le raccord 21 comporte un élément de fermeture central 35 sous la forme d'une aiguille entourée par un canal annulaire de passage de fluide et une chemise de fermeture 36 rappelée par un ressort 37 en direction de la partie de fermeture de l'obturateur 35 comportant un joint d'étanchéité 38.

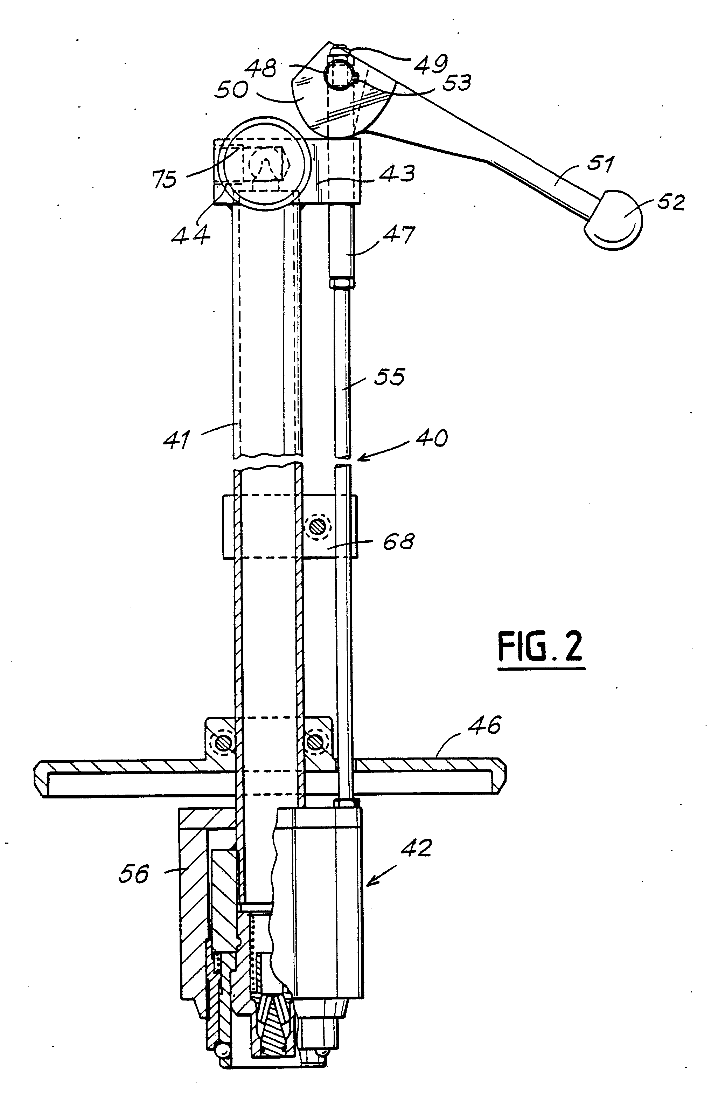

Sur les figures 2, 4, 4A et 48, on voit un dispositif de manutention et de montage d'un bouchon étanche pour trous taraudés suivant l'invention.

Le dispositif désigné de manière générale par le repère 40 comporte un élément tubulaire 41 à l'extrémité inférieure duquel est relié le dispositif de préhension et de montage des bouchons 42.

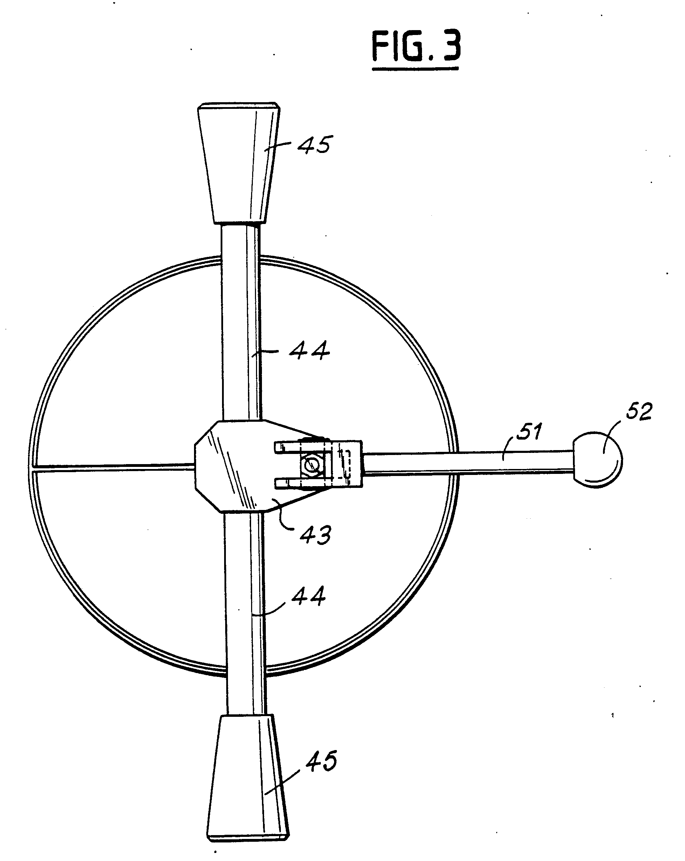

L'extrémité supérieure de l'élément tubulaire 41 est reliée à une platine 43 sur laquelle sont fixés deux bras 44 dans le prolongement l'un de l'autre à l'extrémité desquels sont fixées des poignées 45 (figure 3).

A la partie inférieure de l'élément tubulaire 41, au-dessus du dispositif de préhension 42, est fixé un centreur 46 permettant d'introduire le bouchon dans le trou taraudé correspondant, à travers le trou de passage de la bride du couvercle de cuve.

Dans la platine 43 est également monté coulissant dans la direction axiale de l'élément tubulaire 41, un tirant 47 dont l'extrémité supérieure, disposée au-dessus de la platine 43, est reliée à un axe tubulaire 48 grâce à un écrou frein 49.

L'axe tubulaire 48 est fixé sur une came 50 comportant un levier 51 muni d'une poignée 52. L'axe 48 est arrêté par des circlips 53 engagés sur ses extrémités de part et d'autre de la came 50.

Le tirant 47 est prolongé par une tige de manoeuvre 55 traversant le centreur 46 et reliée à sa partie inférieure à un fourreau 56 monté coulissant sur l'extrémité de l'élément tubulaire 41.

A l'extrémité inférieure du fourreau 56 est fixé un manchon 57, par l'intermédiaire de vis 58.

A l'intérieur du fourreau 56, un manchon 59 est fixé par vissage et soudage sur l'extrémité de l'élément tubulaire 41.

Un raccord 60 est fixé à l'intérieur du manchon 59, par l'intermédiaire d'une vis 61.

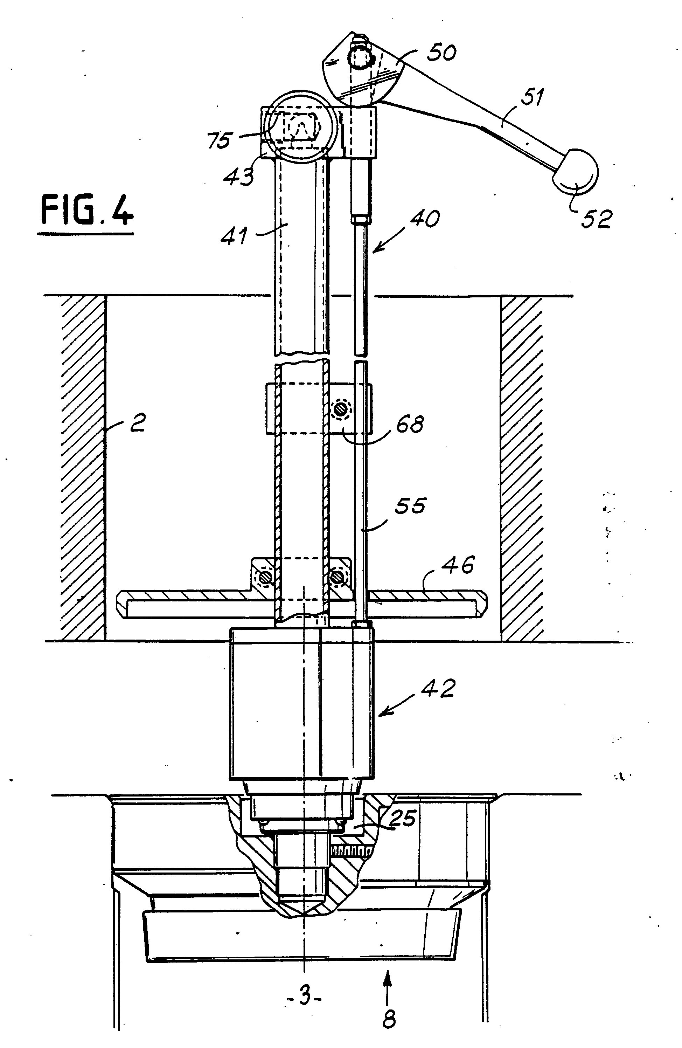

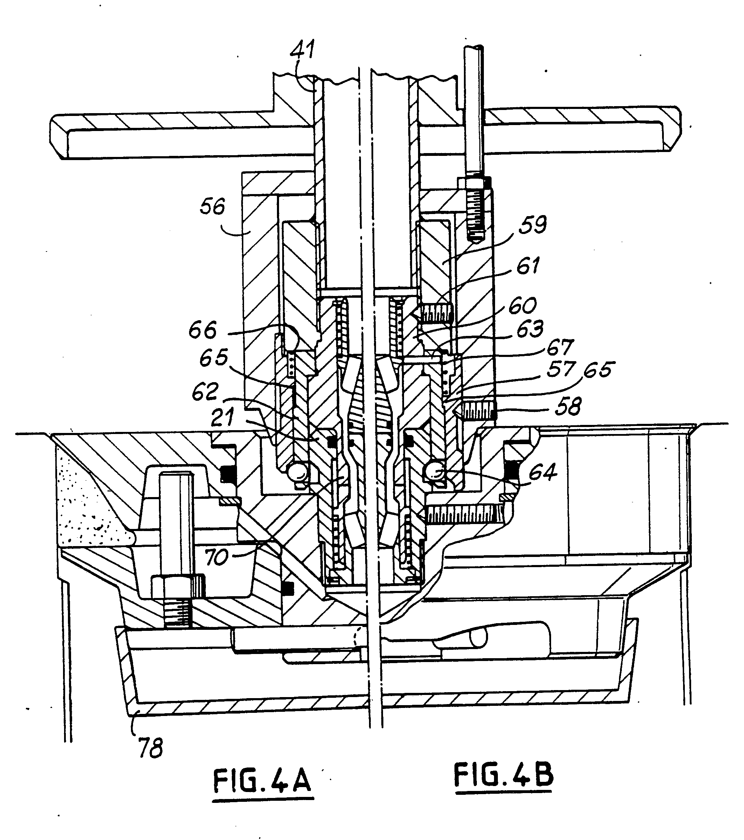

Le raccord 60 est susceptible de venir en contact avec l'extrémité supérieure du raccord 21 fixé dans le moyeu central du bouchon selon l'invention, comme il est visible sur les figures 4A, 4B et 5.

Un fourreau porte-billes 62 vient en appui sur une partie du fourreau 60 par un épaulement et se trouve fixé sur le raccord, 60 par un pion de blocage 63.

Des billes 64 sont disposées dans des cavités de retenue correspondantes, à l'extrémité du fourreau porte-billes 62.

Le manchon 57 coulisse librement sur le fourreau porte-billes 62; le manchon 57 comporte une partie 65 en saillie radiale vers l'intérieur qui peut venir en appui sur un épaulement du fourreau portebilles 62, dans sa position basse.

En position haute, un épaulement 66 du manchon 57 vient en appui sur l'extrémité inférieure du manchon 59.

Dans sa position basse, comme il est visible sur la figure 4B, le manchon 57 recouvre la partie inférieure du fourreau porte-billes 62 et repousse les billes 64 vers l'intérieur, cette position correspondant à la position de préhension de l'outillage.

Un ressort de rappel 67 est intercalé entre la partie inférieure du manchon 59 et la partie en saillie radiale vers l'intérieur du manchon 57. Le ressort 67 assure le maintien du manchon 57 en position de recouvrement sur les billes 64, les manchons 56 et 57 étant l'un et l'autre en position basse.

Pour assurer la libération des billes qui peuvent alors venir dans une position de retrait vers l'extérieur, on fait remonter le manchon 56 fixé à la tige de manoeuvre 55, par l'intermédiaire du tirant 47, grâce à la came 50, en agissant sur le levier de commande 51. La tige de manoeuvre 55 est maintenue dans une position parallèle à l'élément tubulaire 41 grâce à un guide 68 fixé sur l'élément tubulaire et dans lequel coulisse la tige 55.

En se reportant aux figures 4, 4A et 4B, on voit que lorsque l'outillage est introduit par sa partie inférieure de préhension dans l'espace intérieur périphérique 25 d'un bouchon 8, le raccord d'extrémité 60 de cet outillage vient en contact avec l'extrémité supérieure du raccord 21 en fin de course. Préalablement, une partie centrale antérieure 70 du raccord 60 est venue en contact avec la partie mobile intérieure 36 du raccord 21 rappelée en position haute par un ressort 37. Le déplacement vers le bas de l'outillage repousse la partie mobile 36 vers le bas et dégage le canal périphérique du raccord situé autour de l'aiguille 35.

Pour effectuer l'engagement de l'outillage, le levier 51 de la came 50 est maintenu en position relevée.

Après introduction de l'outillage, on relâche le levier et le manchon 57 est repoussé par le ressort de compression 67 dans sa position basse assurant le verrouillage des billes à l'intérieur d'une cavité usinée dans le manchon 21.

L'outillage peut alors effectuer la manutention du bouchon pour venir le placer dans un trou taraudé d'une bride de cuve, comme il est visible sur les figures 4, 4A et 4B.

L'introduction du bouchon dans le trou taraudé 3 est facilitée par le centreur 46 qui est déplacé à l'intérieur de l'alesage 2 de la bride du couvercle de cuve 1.

De plus, la hauteur du bouchon est inférieure à la hauteur de l'espace existant entre le couvercle de cuve 1 et la bride de cuve au niveau des trous 2 et 3 du couvercle et de la bride de cuve respectivement, si bien qu'en cas de mauvais alignement entre le trou 2 du couvercle de cuve et le trou taraudé 3, le bouchon peut être légèrement déplacé et orienté pour être introduit dans la partie lisse du trou taraudé 3.

La partie inférieure de l'outillage est alors solidaire du raccord 21 et du moyeu central 16 du bouchon 8 et l'espace 12 situé entre les pièces 9 et 10 est en communication par l'intermédiaire du canal 29 et de la cavité 28 avec le passage périphérique des raccords 21 et 60 et avec l'espace intérieur de l'élément tubulaire 41.

L'élément tubulaire 41 est raccordé à sa partie supérieure à une pompe à vide qui permet d'établir une dépression dans l'espace 12 entre les flasques 9 et 10.

Cette mise en dépression permet de plaquer le flasque supérieur 10 sur le chanfrein 5 du trou taraudé 3 et de rapprocher le flasque inférieur 9, ce qui a pour effet de comprimer le joint souple 11. On produit ainsi une légère dépression à l'intérieur du trou taraudé 3.

On peut alors effectuer le serrage du joint en manoeuvrant les bras 44 solidaires de la platine 55 pour mettre en rotation l'élément tubulaire 41. Cette mise en rotation de l'élément tubulaire 41 entraîne la rotation du moyeu central 16, par l'intermédiaire du raccord 21, de manière que les verrous 23 et 24 entrent en contact avec la surface inclinée 31 du flasque inférieur 9.

Le serrage du joint peut être effectué en tournant les deux bras de manoeuvre 44 dans le sens des aiguilles d'une montre d'un-huitième de tour.

Dans cette phase, le bouchon d'obturation 8 ne risque pas d'être entraîné en rotation, puisque le joint 11 exerce déjà une pression sur la zone lisse 4 du trou taraudé 3 grâce à la mise sous vide de la zone annulaire 12 située entre les flasques 9 et 10.

La rotation de l'outillage 40 réalise également la fermeture du raccord 21, si bien que la zone annulaire 12 entre les flasques 9 et 10 est isolée de l'extérieur.

La pompe à vide peut alors être débranchée de la prise 75 prévue dans la platine 43.

Quand le bouchon d'obturation 8 est placé et bloqué dans le trou taraudé 3 de la bride de cuve, l'outillage 40 est désolidarisé du bouchon 8 en actionnant vers le haut le levier 51 solidaire de la came 50.

Comme il est visible sur la figure 4A, les billes 64 ne sont alors plus saillantes dans l'alésage du fourreau porte-billes 62.

Lorsqu'on relève l'outil 40, le fourreau porte-billes 62 glisse sur la surface extérieure du raccord 21, de manière que l'outillage se trouve désolidarisé du bouchon d'obturation 8.

Comme il est visible sur les figures 4A et 4B, un couvercle 78 peut être fixé sous le bouchon afin d'assurer une étanchéité parfaite du flasque inférieur 9, dans le cas de la défaillance d'un joint, après de nombreuses utilisations du bouchon. Le couvercle 78 permet d'éviter toute souillure des taraudages de cuve en cas de fuite. De plus, le couvercle 78 permet de faire le vide dans l'espace 12 entre les flasques 9 et 10, même si le joint inférieur du moyeu central 16 est usé et ne présente plus une étanchéité parfaite.

Sur la figure 5, on voit les raccords 60 et 21 dans leur position de contact permettant la mise en oeuvre du bouchon.

Le raccord supérieur 60 fixé sur l'outillage 40 est constitué de deux pièces, à savoir un fourreau extérieur et un obturateur placé dans l'alésage du fourreau. L'obturateur est maintenu par un ressort de compression 79 arrêté par un circlips 80.

L'étanchéité du bouchon 8, au niveau du rac cord 21, est assurée grâce à un joint intérieur 38 et à un joint extérieur 82.

Sur la figure 6, on a représenté une variante de réalisation d'un bouchon 85 suivant l'invention.

Ce bouchon comporte un flasque inférieur 86 et un flasque supérieur 87 entre lesquels est intercalé un joint en matériau souple 88.

Dans ce mode de réalisation, le flasque inférieur 86 ne comporte aucun perçage et aucune pièce qui le traverse; l'étanchéité du trou taraudé est assurée au niveau du joint 88.

Le moyeu 89 du flasque inférieur 86 est usiné dans la partie intérieure du flasque inférieur 86 et se trouve centré dans un alésage du flasque supérieur 87.

Un pion d'arrêt en rotation 90 vissé dans le flasque inférieur 86 et introduit dans un trou du flasque supérieur 87 interdit tout mouvement relatif en rotation des flasques l'un par rapport à l'autre.

Des rampes hélicoïdales 91 sont usinées dans le flasque supérieur 87, pour assurer le serrage du joint 88. Ces rampes comportent des cavités de faible profondeur pour marquer les positions de verrouillage.

Un axe 92 comportant une extrémité 92a en contact avec les rampes 91 traverse le moyeu 89 dans une direction radiale. L'axe 92 traverse le moyeu 89 au niveau de rainures horizontales 94 ayant une extension angulaire autour du moyeu de 45 à 60°.

L'axe 92 est introduit dans le moyeu constituant la partie centrale du flasque supérieur 87, par un canal 95 obturé par une pièce 96 après passage de l'axe.

Un joint d'étanchéité 97 est intercalé entre le moyeu 89 et l'alésage du flasque supérieur 87.

Un clapet 98 permet d'assurer le passage de l'air résiduel de l'espace annulaire 99 compris entre les flasques 86 et 87, par l'intermédiaire du canal 100.

Le clapet empêche à l'inverse, le passage de l'eau boriquée de la piscine vers la zone 99.

L'outil de préhension est constitué de deux éléments tubulaires concentriques 101 et 102. L'élément tubulaire extérieur 101 comporte une partie d'assemblage inférieure 103 qui vient s'engager dans une encoche 104 du moyeu du flasque inférieur 86. La partie d'engagement 103 de l'élément tubulaire 101 réalise le maintien du bouchon, pour éviter sa mise en rotation.

L'élément tubulaire intérieur 102 dont une partie est visible sur la figure 6A comporte une rainure en forme de L comportant une branche verticale d'engagement 105 et une branche horizontale 106. Cette rainure en L permet le maintien et la manoeuvre de l'axe 92 engagé dans le moyeu.

Le bouchon est maintenu par un système de poussée 107 à ressort en appui sur l'axe 92 assurant le maintien du bouchon sur l'outillage, lorsque l'axe 92 est engagé dans le fond de la rainure horizontale 106.

L'extrémité inférieure de l'élément tubulaire 102 comporte également un appendice 108 destiné à venir en appui sur l'extrémité de la tige du clapet 98. On obtient ainsi la mise en communication de l'espace 99 avec l'atmosphère extérieure.

Lorsque le bouchon d'obturation a été mis en place dans le trou taraudé, à l'aide de l'outillage, l'élément tubulaire extérieur 101 assure le maintien en rotation du bouchon tandis que l'on fait tourner l'élément tubulaire intérieur 102. Cet élément tubulaire intérieur 102 entraîne l'axe 92 en rotation, si bien que son extrémité 92a vient en contact avec la rampe 91 de manière à rapprocher le flasque inférieur 86 du flasque supérieur 87 en comprimant fortement le joint souple 88 en matériau élastomère. Ce joint 88 assure l'étanchéité du bouchon, dans la partie lisse du trou taraudé.

L'outil est' ensuite dégagé et le clapet 98 obture de nouveau la zone annulaire 99.

On remarquera que, dans le cadre de cette variante, il n'est pas nécessaire d'assurer une mise en dépression de la chambre annulaire entre les flasques.

Dans tous les cas, le bouchon suivant l'invention permet de réaliser une fermeture étanche de trous taraudés tels que ceux de la bride d'une cuve de réacteur nucléaire, de manière efficace et avec une mise en oeuvre à distance permettant d'éviter d'exposer des opérateurs à une forte dose d'irradiation.

L'invention ne se limite pas aux modes de réalisation qui ont été décrits.

On peut imaginer d'autres moyens pour assurer le rapprochement des flasques inférieur et supérieur du bouchon ainsi que le verrouillage de ces flasques l'un sur l'autre.

On peut également imaginer des outils de manutention et de mise en place du bouchon ayant une structure et un mode de fonctionnement différents de ceux qui ont été décrits.

L'invention s'applique à la fermeture étanche de trous différents des trous de fixation d'un couvercle sur la bride de cuve d'un réacteur nucléaire à eau sous pression et par exemple la fermeture de trous taraudés quelconques.

## Revendications

1.- Bouchon étanche pour trous taraudés tels que les trous de fixation d'un couvercle sur la bride de cuve d'un réacteur nucléaire à eau sous pression, comportant un corps en deux parties (9, 10 ; 86, 87) en forme de flasques dont le diamètre extérieur maximal est inférieur au diamètre intérieur d'une partie lisse d'entrée du trou taraudé (3) assemblées entre elles de manière à être bloquées en rotation autour de leur axe commun et mobiles en translation axiale l'une par rapport à l'autre, un joint (11, 88) en matériau souple intercalé entre les deux parties (9, 10 ; 86, 87) du corps dans sa zone périphérique, des moyens de déplacement relatif et de blocage en translation axiale des deux parties (9, 10 ; 86, 87) l'une par rapport à l'autre, et des moyens de raccordement du bouchon à un outil de manutention et de mise en place, caractérisé par le fait que les moyens de déplacement et de blocage et les moyens de raccordement à un outil comportent :
- un moyeu central (16) monté rotatif dans une partie du corps (9, 10) du bouchon (8) autour de l'axe de ce corps et comportant au moins un verrou de blocage (23, 24) des deux parties (9, 10) du corps, l'une par rapport à l'autre dans la direction axiale,
- un raccord (21) monté en position centrale dans le moyeu (16) dont une partie interne communique avec une chambre (12) comprise entre les deux parties du corps (9, 10) et fermée à sa périphérie par le joint (11),
- un élément d'obturation (36) du raccord (21) rappelé en position de fermeture par un ressort (37) et au moins une cavité de préhension sur la surface externe du raccord (21).

2.- Bouchon étanche suivant la revendication 1, caractérisé par le fait que le moyeu central (16) traverse axialement les deux flasques (9, 10) et comporte un moyen de blocage axial (20) par rapport à l'un des flasques (10) et au moins un verrou de fermeture (23, 24) destiné à coopérer avec une surface de blocage (22) inclinée sur le second flasque, pour réaliser le verrouillage ou le déverrouillage des deux flasques l'un sur l'autre par rotation dans un sens ou dans l'autre du moyeu central (16).

3.- Bouchon étanche suivant l'une quelconque des revendications 2 et 3, caractérisé par le fait que le moyeu central (16) comporte, autour du raccord (21), une cavité annulaire (25) pour l'introduction d'un outil en position de préhension, dans la cavité de préhension du raccord (21).

4.- Bouchon étanche suivant l'une quelconque des revendications 1 à 3, caractérisé par le fait qu'il comporte une coupelle (78) de rétention de fuite disposée suivant la face du flasque (9) dirigée vers l'intérieur du trou taraudé (3).

5.- Outillage pour la manutention et la mise en place d'un bouchon étanche suivant l'une des revendications 1 à 4, caractérisé par le fait qu'il comporte un corps tubulaire (41) à l'une des extrémités duquel est monté un ensemble de préhension (42) d'un bouchon (8) et comportant à son autre extrémité des moyens de manoeuvre (44, 45, 50, 51) de l'ensemble de préhension (42).

6.- Outillage suivant la revendication 5, caractérisé par le fait que l'ensemble de préhension (42) comporte des moyens de manoeuvre tubulaires (56, 57) coulissant axialement sur l'extrémité de l'élément tubulaire (41), un ensemble de blocage (59, 62) fixé à l'extrémité de l'élément tubulaire (41) coaxialement et à l'intérieur des moyens de manoeuvre tubulaires comportant des billes de blocage (64) à déplacement radial et un bouchon (60) fixé coaxialement aux moyens de manoeuvre (56, 57) et à l'ensemble de blocage (59, 62) en position centrale, comportant un canal de direction axiale et un prolongement (70) destiné à coopérer avec l'élément d'obturation (36) pour réaliser l'ouverture du raccord (21), les moyens de manoeuvre (56, 57) étant associés à des moyens pour bloquer les billes (64) dans la cavité du raccord (21) ou pour les libérer.

7.- Outillage suivant la revendication 6, caractérisé par le fait que les moyens de blocage et de libération des billes (64) sont constitués par un ressort (67) de rappel des moyens de manoeuvre (56, 57) en appui sur une partie de l'ensemble de blocage (51, 52) et par un ensemble à levier et à tige de manoeuvre (50, 51, 43, 55) relié à l'une de ses extrémité aux moyens de manoeuvre (56, 57) et dont le levier d'actionnement (50, 51) est associé à l'extrémité de l'élément tubulaire (41) opposée à l'ensemble de préhension (42).

8.- Outillage suivant l'une quelconque des revendications 5 à 7, caractérisé par le fait que l'élément tubulaire (41) est relié, à son extrémité opposée à l'ensemble de préhension (42), à des bras et poignées (44, 45) de mise en rotation autour de son axe pour faire tourner le moyeu central (16) du bouchon (8) par l'intermédiaire de l'ensemble de préhension (42), dans un sens ou dans l'autre, afin de verrouiller ou de déverrouiller les flasques (9, 10) du corps du bouchon et de fermer ou d'ouvrir le raccord (21).

9.- Outillage suivant l'une quelconque des revendications 5 à 8, caractérisé par le fait que le volume interne de l'élément tubulaire (41) est relié, à l'extrémité de l'élément tubulaire opposée à l'ensemble de préhension (42), à un ajutage (75) de liaison à une pompe à vide, de manière à faire le vide dans l'espace (12) entre les flasques (9, 10) et à réaliser leur serrage lorsque l'ensemble de préhension (42) est mis en prise avec le bouchon (8) par l'intermédiaire du raccord (21) dont l'alésage communique avec le volume interne de l'élément tubulaire (41).

10.- Bouchon étanche pour trous taraudés tels que les trous de fixation d'un couvercle sur la bride de cuve d'un réacteur nucléaire à eau sous pression, comportant un corps en deux parties (9, 10 ; 86, 87) en forme de flasques dont le diamètre extérieur maximal est inférieur au diamètre intérieur d'une partie lisse d'entrée du trou taraudé (3) assemblées entre elles de manière à être bloquées en rotation autour de leur axe commun et mobiles en translation axiale l'une par rapport à l'autre, un joint (11, 88) en matériau souple intercalé entre les deux parties (9, 10 ; 86, 87) du corps dans sa zone périphérique, des moyens de déplacement relatif et de blocage en translation axiale des deux parties (9, 10 ; 86, 87) l'une par rapport à l'autre, et des moyens de raccordement du bouchon à un outil de manutention et de mise en place, caractérisé par le fait que les deux flasques (86, 87) du corps du bouchon (85) sont engagés l'un sur l'autre, par l'intermédiaire d'un moyeu (89) solidaire de l'un des flasques (86) et assemblés de manière à délimiter un espace interne (99) étanche en communication avec l'atmosphère extérieure par l'intermédiaire d'un clapet (98), l'un des flasques (87) comportant une surface de came (91) et l'autre flasque (86) un axe (92) monté mobile dans le flasque (86) susceptible de coopérer avec la surface de came (91) pour réaliser le serrage ou le desserrage des deux flasques (86, 87).

11.- Outillage pour la manutention et la mise en oeuvre d'un bouchon suivant la revendication 10 caractérisé par le fait qu'il comporte :
- une chemise tubulaire externe (101) ayant une partie d'extrémité (103) de blocage en rotation du flasque (87) du bouchon comportant la surface de came (91),
- et une chemise tubulaire interne (102) comportant un élément d'appui (107 sur l'axe (92) et une lumière (105, 106) dans sa surface latérale pour l'engagement de l'axe (92) afin de le déplacer au contact de la surface de came (91) par rotation de la chemise tubulaire (102) autour de son axe.

12.- Outillage suivant la revendication 11, caractérisé par le fait que la lumière (105, 106) de la chemise tubulaire (102) présente la forme d'un L dont une branche est de direction axiale et l'autre branche de direction périphérique sur la chemise (102).

13.- Procédé de pose d'un bouchon étanche de fermeture d'un trou taraudé (3), caractérisé en ce qu'on introduit dans une partie lisse du trou taraudé (3), un corps en deux parties (9,10) assemblées entre elles de manière à être bloquées en rotation autour de leur axe commun et mobile en translation axiale, l'une par rapport à l'autre, un joint souple (11) étant intercalé entre les deux parties (9,10) du corps dans sa partie périphérique et une chambre (12) étant ménagée entre les deux parties (9,10) et délimitée vers l'extérieur par le joint (11),
- qu'on produit une dépression dans la chambre (12) de manière à rapprocher l'une de l'autre les deux parties (9,10), à dilater radialement le joint (11) et à l'appliquer contre la paroi du trou (3),
- et qu'on réalise un verrouillage mécanique des deux parties (9,10) l'une sur l'autre, dans leur position rapprochée.

14.- Procède de pose suivant la revendication 13, d'un bouchon étanche de fermeture d'un trou taraudé (3) d'une bride de cuve d'un réacteur nucléaire pour la fixation d'un couvercle de cuve comportant des ouvertures (2) dans des positions correspondant aux trous (3), disposées à une certaine hauteur au-dessus des trous taraudés (3) de la bride de cuve, caractérisé par le fait qu'on introduit le bouchon (8) dont la hauteur est inférieure à la hauteur de l'espace séparant le couvercle de cuve de la bride de cuve, dans un trou taraudé (3) de la bride de cuve, en passant par un trou (2) du couvercle de cuve et en orientant le bouchon (8) à sa sortie du trou (2) du couvercle de cuve pour le faire pénétrer dans le trou taraudé (3).

FRAMATOME

FIG.1

FIG. 2

# FIG.3

**FIG.4**

FIG.4A    FIG.4B

FIG.5

FIG.6A

FIG.6

Office européen
des brevets

# RAPPORT DE RECHERCHE EUROPEENNE

Numero de la demande

EP 90 40 0647

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 029 956 (BROWN BOVERI) <br> * Page 2, ligne 21 - page 3, ligne 22; page 5, ligne 23 - page 6, ligne 20; page 8, lignes 15-36; figures 2,3 * <br> --- | 1,5,8, 14 | G 21 C 13/06 |
| A,D | EP-A-0 187 707 (WESTINGHOUSE) <br> * Page 3, ligne 21 - page 4, ligne 30, page 6, lignes 5-28; page 9, lignes 3-21; page 10, lignes 12-21; page 11, lignes 17-22; page 13, lignes 1-30; figures 3-5 * <br> --- | 1,3,5, 10,12, 14 | |
| A | US-A-4 758 402 (SCHUKEI et al.) <br> * Colonne 5, lignes 47-57; figure 2 * <br> --- | 2 | |
| A | FR-A-1 268 066 (NPPC AGIP) <br> * Page 1, colonne de droite, alinéa 4; page 3, colonne de gauche, alinéa 1; figure 1 * <br> ----- | 6 | |
| | | | **DOMAINES TECHNIQUES RECHERCHES (Int. Cl.5)** |
| | | | G 21 C 13/00 <br> G 21 F 5/00 |

**Le présent rapport a été établi pour toutes les revendications**

| Lieu de la recherche | Date d'achèvement de la recherche | Examinateur |
|---|---|---|
| LA HAYE | 13-06-1990 | CAPOSTAGNO E. |